# EUROPÄISCHE PATENTSCHRIFT

(11) **EP 1 150 444 B1**
(45) Veröffentlichungstag und Bekanntmachung des Hinweises auf die Patenterteilung: **05.11.2003**
(21) Anmeldenummer: 01108247.6
(22) Anmeldetag: 31.03.2001
(51) Int. Cl.: H04B 10/10, H04B 1/08

(54) **Elektronisches Gerät mit verbindbaren Frontteil**
Electronic apparatus with attachable front panel
Dispositif électronique avec un panneau frontal attachable

(30) Priorität: 29.04.2000 DE 10021127
(43) Veröffentlichungstag der Anmeldung: 31.10.2001
(73) Patentinhaber: Siemens Aktiengesellschaft, 80333 München (DE)
(72) Erfinder: Troedel, Bernhard, 65550 Limburg (DE); Reichel, Wolfgang, 35516 Münzenberg (DE); Römer, Michael, 35460 Staufenberg (DE)

(56) Entgegenhaltungen:
- EP-A- 0 837 385
- EP-A- 0 899 889
- EP-A- 0 961 423
- DE-A- 4 118 486
- DE-A- 4 410 741
- US-A- 5 781 321

## Beschreibung

Die Erfindung betrifft ein elektronisches Gerät mit einem elektronische Bauteile aufweisenden Gehäuse und einem mit dem Gehäuse zu verbindenden Frontteil, welches beispielsweise Bedienelemente und/oder ein Display aufweist und mit den elektronischen Bauteilen des Gehäuses Verbindung hat.

Geräte dieser Art können für sehr unterschiedliche Zwecke ausgebildet sein. Es kann sich bei ihnen beispielsweise um ein Kombiinstrument für ein Kraftfahrzeug, um ein Fahrzeugnavigationsgerät oder ein Radiogerät handeln. Bei solchen Geräten wird das Frontteil meist separat von dem Gehäuse gefertigt und anschließend mit dem Gehäuse verbunden. Dabei muss das Frontteil oftmals in einer Aufnahme einer Armaturentafel sitzen, während das Gehäuse hinter der Armaturentafel an einem Instrumententräger befestigt wird. Die erforderlichen elektrischen Verbindungen werden anschließend durch eine Vielzahl mechanischer Steckverbindungen erzeugt, was relativ hohe Kosten verursacht, zu Kontaktproblemen und EMV-Problemen führen kann und relativ enge Toleranzen erfordert. Bei groberen Toleranzen sieht man oftmals auch eine Steckeraufnahme an einem Bauteil vor, in die ein an einem flexiblen Kabel des anderen Bauteils befestigter Stecker von Hand zu stecken ist. Hierdurch lassen sich zwar Fluchtungsfehler zwischen dem Gehäuse und dem Frontteil ausgleichen, jedoch erfordert die Herstellung der elektrischen Verbindung einen zusätzlichen Arbeitsgang, der vergessen werden kann. Weiterhin treten die üblichen Probleme von Steckverbindungen auf.

Der Erfindung liegt das Problem zugrunde, ein elektronisches Gerät der eingangs genannten Art so auszubilden, dass sein Frontteil mit besonders groben Maßabweichungen mit dem Gehäuse verbunden werden kann, ohne dass Kontaktprobleme auftreten.

Dieses Problem wird erfindungsgemäß dadurch gelöst, dass zur Herstellung der Verbindungen am Frontteil ein Sender und ein Empfänger und dazu entsprechend an dem Gehäuse ein Empfänger und ein Sender angeordnet sind, wobei die Verbindungen induktiv ausgestaltet sind.

Durch diese Gestaltung kann man gänzlich auf mechanische Verbindungen zwischen dem Frontteil und den elektronischen Bauteilen in dem Gehäuse verzichten. Da die Sender und Empfänger sich unmittelbar gegenüberliegend angeordnet werden können, benötigen sie nur eine sehr geringe Leistung, so dass es sich bei ihnen um kostengünstig erhältliche Bauteile handeln kann. Weiterhin führen selbst relativ grobe Maßabweichungen, insbesondere ein seitlicher Versatz, nicht zu Störungen der Verbindung, da drahtlose Verbindungen im allgemeinen keine Fluchtungsgenauigkeit erfordern. Für die Anwendung in Kraftfahrzeugen ist es besonders günstig, dass das erfindungsgemäße Gerät aufgrund der fehlenden mechanischen Kontakte erschütterungsunempfindlich ist.

Die Erfindung erfolgt durch eine induktive Verbindung beider Bauteile. Das elektronische Gerät ist besonders kostengünstig ausgebildet, wenn gemäß einer anderen Weiterbildung der Erfindung die Sender jeweils eine Sendediode und die Empfänger jeweils eine Empfangsdiode aufweisen. Solche Sender und Empfänger sind beispielsweise bei Fernbedienungen für Fernsehgeräte oder Videogeräte gebräuchlich und werden deshalb in großen Stückzahlen hergestellt, so dass sie kostengünstig erhältlich sind. Da sie mit Licht arbeiten, führen sie nicht zu Störungen aufgrund elektromagnetischer Signale und können daher auch nicht von elektromagnetischen Wellen beeinflusst werden.

Vorteilhaft ist es auch, wenn das Frontteil ein zur Diebstahlsicherung manuell ohne Werkzeug von dem Gehäuse lösbares Bauteil ist. Hierdurch entsteht beispielsweise bei einem als Autoradio ausgebildeten Gerät die Möglichkeit, beim Verlassen des Fahrzeugs das Frontteil vom Gehäuse abzuheben und mitzunehmen, so dass das Autoradio vor Diebstahl geschützt wird.

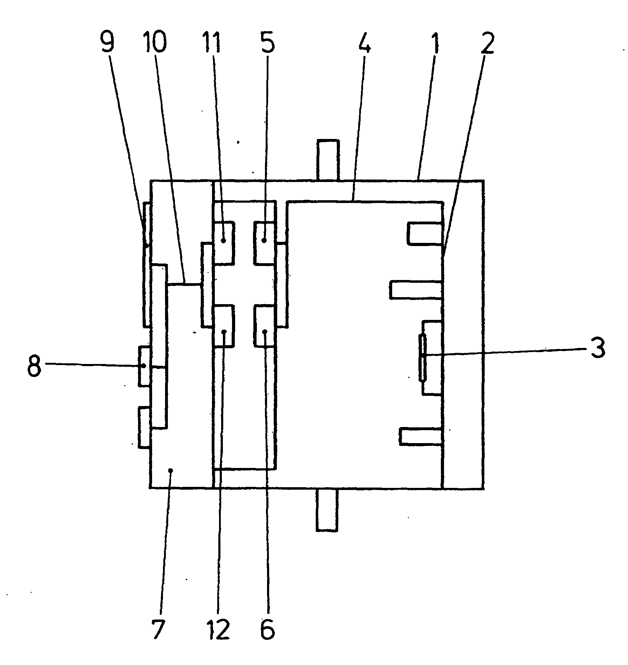

Die Erfindung lässt verschiedene Ausführungsformen zu. Eine optische Lösung ist aus dem Dokument DE 4 410 741 bekannt. Zur weiteren Verdeutlichung ihres Grundprinzips ist eine davon schematisch in der Zeichnung dargestellt und wird nachfolgend beschrieben.

Die Zeichnung zeigt stark schematisch ein Gehäuse 1, in welchem auf einer Leiterplatte 2 elektronische Bauteile 3 angeordnet sind. Diese Bauteile 3 sind über Leiter 4 mit einem als Sendediode ausgebildeten Sender 5 und einem als Empfangsdiode ausgebildeten Empfänger 6 an der Vorderseite des Gehäuses 1 verbunden.

Auf der Vorderseite des Gehäuses 1 ist ein Frontteil 7 befestigt, welches beispielsweise als Bedienteil ausgebildet ist und Bedienelemente 8 sowie ein Display 9 hat. Diese Bedienelemente 8 und das Display sind durch Leiter 10 mit einem Empfänger 11 und einem Sender 12 verbunden. Bei dem Empfänger 11 handelt es sich um einem Empfangsdiode, die genau fluchtend zum Sender 5 angeordnet ist. Entsprechend ist der Sender 12 genau fluchtend zum Empfänger 6 angeordnet und als Sendediode ausgebildet.

## Patentansprüche

1. Elektronisches Gerät mit einem elektronische Bauteile aufweisenden Gehäuse und einem mit dem Gehäuse zu verbindenden Frontteil, welches beispielsweise Bedienelemente und/oder ein Display aufweist und mit den elektronischen Bauteilen des Gehäuses Verbindung hat, wobei zur Herstellung der Verbindungen am Frontteil ein Sender (12) und ein Empfänger (11) und dazu entsprechend an dem Gehäuse (1) ein Empfänger (6) und ein Sender (5) angeordnet sind, **dadurch gekennzeichnet, dass** die Verbindungen, induktiv ausgestaltet sind.

2. Elektronisches Gerät nach Anspruch 1, **dadurch gekennzeichnet, dass** die Sender (5, 12) jeweils eine Sendediode und die Empfänger (6, 11) jeweils eine Empfangsdiode aufweisen.

3. Elektronisches Gerät nach den Ansprüchen 1 oder 2, **dadurch gekennzeichnet, dass** das Frontteil (7) ein zur Diebstahlsicherung manuell ohne Werkzeug von dem Gehäuse (1) lösbares Bauteil ist.

## Claims

1. Electronic appliance having a housing, which contains electronic components, and a front part which can be connected to the housing, has control elements and/or a display, for example, and is connected to the electronic components in the housing, it being the case that, to make the connections, a transmitter (12) and a receiver (11) are arranged on the front part, and a receiver (6) and a transmitter (5) are arranged correspondingly on the housing (1), **characterised by** in that the connections are of inductive design.

2. Electronic appliance according to Claim 1, **characterised in that** the transmitters (5, 12) each have a transmission diode, and the receivers (6, 11) each have a reception diode.

3. The electronic appliance as claimed in claims 1 or 2, wherein the front part (7) is a component which can be detached from the housing (1) manually, without a tool, for the purposes of antitheft protection.

## Revendications

1. Appareil électronique ayant un boîtier comportant des composants électroniques et un panneau avant destiné à être relié au boîtier, panneau qui comporte, à titre d'exemple, des éléments de commande et/ou un écran ou display et qui est en liaison avec les composants électroniques du boîtier, alors que, pour établir les connexions, un émetteur (12) et un récepteur (11) sont disposés sur le panneau avant et, en correspondance avec eux, un récepteur (6) et un émetteur (5) sont disposés sur le boîtier (1), **caractérisé par le fait que** les liaisons sont conçues inductives.

2. Appareil électronique selon la revendication 1 **caractérisé par le fait que** les émetteurs (5, 12) comportent chacun une diode émettrice et les récepteurs (6, 11) chacun une diode réceptrice.

3. Appareil électronique selon la revendication 1 ou 2 **caractérisé par le fait que** le panneau avant (7) est un constituant qui peut, pour la protection contre les vols, être séparé du boîtier (1), manuellement et sans outil.
